# EUROPEAN PATENT APPLICATION

(11) **EP 3 912 806 A1**
(43) Date of publication of application: **24.11.2021**
(21) Application number: 20741053.1
(22) Date of filing: 14.01.2020
(51) Int. Cl.: B32B 15/08, B29C 65/52, C23C 26/00

(54) **METAL-RESIN JOINED BODY AND PRODUCTION METHOD THEREFOR**

(30) Priority: 15.01.2019 JP 2019004394
(71) Applicant: Showa Denko K.K., Tokyo 105-8518 (JP)
(72) Inventor: OTANI, Kazuo, Tokyo 105-8518 (JP); NUMAO, Shinji, Tokyo 105-8518 (JP)
(74) Representative: Strehl Schübel-Hopf & Partner
(86) International application number: PCT/JP2020/000799
(87) International publication number: WO 2020/149249

(57) **Abstract**

To provide a metal-resin bonded article that is capable of stably retaining a sufficient bonding strength for a long period of time, and a method for producing the same. A metal-resin bonded article including a composite laminate including a metal base material having laminated thereon one layer or plural layers of a resin coating layer, and a resin material bonded and integrated thereto, the resin coating layer being laminated on a surface-treated surface of the metal base material, at least one layer of the resin coating layer containing a resin composition containing a linear chain polymer having a linear polymer structure polymerized on the metal base material, a bonding strength between the composite laminate and the resin material satisfying the following condition 1, and an adhesion force between the metal base material and the resin coating layer satisfying the following condition 2: (condition 1) a value evaluated by a tensile shear test according to the evaluation methods for the adhesion interface performance in plastic-metal assemblies of ISO 19095, after retaining the composite laminate and the resin material having been bonded and integrated to each other, under ordinary temperature and ordinary humidity for 24 to 48 hours, being 10 MPa or more, (condition 2) values evaluated according to the crosscut test of JIS K5600_5_6, after retaining the composite laminate having been produced, under ordinary temperature and ordinary humidity for 24 to 48 hours, and after immersing the composite laminate having been produced, in warm water at 60°C for 24 hours, being both 0.

## Description

### Technical Field

The present invention relates to a metal-resin bonded article including a metal base material bonded to a resin material, and a method for producing the same.

### Background Art

In the fields of automobile components, OA equipments, and the like, weight reduction of components and products is being required. In these fields, there are frequently cases using a composite material including a metal material, such as aluminum, and a resin material, which are firmly bonded and integrated to each other, from the standpoint of the weight reduction of components and products. In the case where aluminum is used as the metal material in the composite material, it is the current practice that the aluminum material is subjected to a surface treatment for sufficiently securing the bonding strength.

As for the surface treatment of the aluminum material, physical surface treatment methods, such as a shot blasting treatment, have been generally used. However, the physical surface treatment methods are inferior in productivity and are not suitable for articles having a thin shape or a complicated shape, and therefore the application of a chemical surface treatment to the aluminum material is being currently studied.

For example, a chemical surface treatment method has been known, in which a metal surface film is formed on a surface of an aluminum material, which is then made into contact with an etching solution to form a porous etched layer on the surface of the material (see PTL 1). A method has also been known, in which an underlayer treatment film is provided on a surface of a base material formed of an aluminum alloy, and an adhesive layer containing a modified polypropylene resin having a polar group introduced thereto is formed thereon (see PTL 2). A method has also been known, in which an aluminum material is dipped in an electrolytic bath of phosphoric acid or sodium hydroxide to form an anodically oxidized film having pores, in which at least 85% of the pores that open on the surface thereof have a diameter of 25 to 90 nm by DC electrolysis, and a molten synthetic resin is injection molded on the surface having the anodically oxidized film formed thereon, so as to enhance the bonding strength through the anchoring effect (see PTL 3).

There has been also proposed a method, in which an uneven thin film of a metal oxide or a metal phosphate is formed on a fine uneven surface formed by subjecting a surface of an aluminum material to an etching treatment (see PTL 4).

There has been also proposed use of a surface reactive solid material (such as a metal material), which is produced in such a manner that a solid material, such as a metal material or a ceramic material, is dipped in a solution containing a water soluble alkoxysilane-containing triazinedithiol metal salt, so as to make the water soluble alkoxysilane-containing triazinedithiol metal salt attached to the surface of the solid material (see PTL 5).

A metal-resin composite molded article has been also known, which includes a polypropylene resin layer that is bonded to a metal base material through a hydrophilic surface formed on the metal base material, and a thermoplastic resin molded article is bonded to the polypropylene resin layer through solubilization with the polypropylene resin layer and an anchoring effect (see PTL 6).

### Citation List

### Patent Literatures

PTL 1: JP 2012-41579 A
PTL 2: JP 2016-16584 A
PTL 3: Japanese Patent No. 4,541,153
PTL 4: JP 2010-131888 A
PTL 5: JP 2006-213677 A
PTL 6: JP 2017-1378 A

### Summary of Invention

### Technical Problem

The surface-treated aluminum materials of PTLs 1 to 3 can be favorably bonded to a bonding target of various materials (such as a metal material and an organic material), but have a problem that it is difficult to provide a sufficient bonding strength in the case where the surface-treated aluminum material after elapse of a long period of time, such as storing, is bonded to a bonding target. For example, in the case where the surface-treated aluminum material is delivered to a molding manufacturer and is bonded to a bonding target in the molding manufacturer, a certain period of time is often elapsed for inspection, transportation, storing, and the like, and there is a problem that it is difficult to provide a sufficient bonding strength in the case where the surface-treated aluminum material is bonded to a bonding target after elapse of a long period of time.

The technique described in PTL 4 employs the surface treatment process for forming the uneven thin film of a metal oxide or a metal phosphate includes a chemical etching step of dipping an aluminum alloy in a strongly basic aqueous solution, a neutralizing step of dipping the aluminum alloy in an acidic aqueous solution, and a fine etching step of dipping the aluminum alloy in an aqueous solution containing one or more kind selected from hydrated hydrazine, ammonia, and a water soluble amine compound (see claim 8 of PTL 4), and therefore there is a problem that the waste liquid treatment of hydrated hydrazine, ammonia, and a water soluble amine compound after use is necessarily performed.

In the technique described in PTL 5, the water soluble alkoxysilane-containing triazinedithiol metal salt is attached to a solid surface to achieve favorable bonding to a bonding target of a material of a different kind, but there is a problem that it is difficult to provide a sufficient bonding strength in the case where the surface reactive solid material (such as a metal material) having the water soluble alkoxysilane-containing triazinedithiol metal salt attached thereto is bonded to a bonding target after elapse of a long period of time, such as transportation and storing.

In the technique described in PTL 6, it is difficult to provide a sufficient bonding strength since the thermoplastic resin has a high viscosity even after melting, and the thermoplastic resin cannot sufficiently enter the fine pores (unevenness) on the surface of the metal base material.

The present invention has been made in view of the aforementioned technical background, and an object thereof is to provide a metal-resin bonded article that is capable of stably retaining a sufficient bonding strength for a long period of time, and a method for producing the same.

### Solution to Problem

For achieving the objects, the present invention provides the following measures.

[1] A metal-resin bonded article including a composite laminate including a metal base material having laminated on a surface of the metal base material one layer or plural layers of a resin coating layer, and a resin material bonded and integrated thereto, the resin coating layer being laminated on a surface-treated surface of the metal base material, a bonding strength between the composite laminate and the resin material satisfying the following condition 1, and an adhesion force between the metal base material and the resin coating layer satisfying the following condition 2:
   (condition 1)
      a value evaluated by a tensile shear test according to the evaluation methods for the adhesion interface performance in plastic-metal assemblies of ISO 19095, after retaining the composite laminate and the resin material having been bonded and integrated to each other, under ordinary temperature and ordinary humidity for 24 to 48 hours, being 10 MPa or more,
   (condition 2)
      values evaluated according to the crosscut test of JIS K5600_5_6, after retaining the composite laminate having been produced, under ordinary temperature and ordinary humidity for 24 to 48 hours, and after immersing the composite laminate having been produced, in warm water at 60°C for 24 hours, being both 0.
[2] The metal-resin bonded article according to the item [1], wherein the resin composition containing the linear chain polymer having a linear polymer structure contains a resin composition containing, as a constitutional component, at least one of the following items (1) and (2), which each are a combination of polyaddition reactive compounds forming the linear chain polymer, or a resin composition containing a linear chain polymer, which is a radical homopolymer or a radical copolymer of a monofunctional monomer having an unsaturated group:
   (1) at least one compound selected from the group consisting of a bifunctional glycol compound, a bifunctional amino compound, and a bifunctional thiol compound, and a bifunctional isocyanate compound,
   (2) at least one selected from the group consisting of a bifunctional carboxy compound and a bifunctional thiol compound, and a bifunctional epoxy compound.
[3] The metal-resin bonded article according to the item [1] or [2], wherein the resin coating layer includes plural layers, at least one layer of which contains a cured material of a thermosetting resin, and the thermosetting resin is at least one kind selected from the group consisting of a urethane resin, an epoxy resin, a vinyl ester resin, and an unsaturated polyester resin.
[4] The metal-resin bonded article according to any one of the items [1] to [3], wherein the composite laminate includes a functional group adherent layer between the surface of the metal base material and the resin coating layer, the functional group adherent layer is laminated in contact with the metal base material and the resin coating layer, and the functional group adherent layer has a functional group introduced from at least one kind selected from the group consisting of a silane coupling agent, an isocyanate compound, and a thiol compound.
[5] The metal-resin bonded article according to any one of the items [1] to [4], wherein the surface treatment is at least one kind selected from the group consisting of a blast treatment, a grinding treatment, an etching treatment, a chemical conversion treatment, a plasma treatment, a corona discharge treatment, and an UV ozone treatment.
[6] The metal-resin bonded article according to any one of the items [1] to [5], wherein the metal base material contains aluminum.
[7] The metal-resin bonded article according to the item [6], wherein the surface treatment includes at least one kind of an etching treatment and a boehmite treatment.
[8] The metal-resin bonded article according to any one of the items [1] to [5], wherein the metal base material contains a metal selected from the group consisting of iron, titanium, magnesium, a stainless steel, and copper.
[9] The metal-resin bonded article according to any one of the items [1] to [8], wherein the resin coating layer is a primer layer, and the surface of the composite laminate on the side of the primer layer and the resin material are bonded and integrated to each other.
[10] A method for producing the metal-resin bonded article according to any one of the items [2] to [9], the method including forming at least one layer of the resin coating layer by subjecting a combination of polyaddition reactive compounds forming the linear chain polymer to polyaddition reaction, or subjecting a radically polymerizable compound, which is the monofunctional monomer having an unsaturated group, to homopolymerization or copolymerization, on the surface-treated surface of the metal base material, the combination of polyaddition reactive compounds being at least one of the following items (1) and (2):
   (1) at least one compound selected from the group consisting of a bifunctional glycol compound, a bifunctional amino compound, and a bifunctional thiol compound, and a bifunctional isocyanate compound,
   (2) at least one selected from the group consisting of a bifunctional carboxy compound and a bifunctional thiol compound, and a bifunctional epoxy compound.
[11] The method for producing the metal-resin bonded article according to the item [10], wherein the method includes, before forming the resin coating layer, subjecting the metal base material to at least one kind of a surface treatment selected from the group consisting of a blast treatment, a grinding treatment, an etching treatment, a chemical conversion treatment, a plasma treatment, a corona discharge treatment, and an UV ozone treatment.
[12] The method for producing the metal-resin bonded article according to the item [10] or [11], wherein the method includes, before forming the resin coating layer, treating the surface-treated surface of the metal base material with at least one kind selected from the group consisting of a silane coupling agent, an isocyanate compound, and a thiol compound.
[13] The method for producing the metal-resin bonded article according to any one of the items [10] to [12], wherein the resin material is molded by at least one kind of a method selected from the group consisting of injection molding, press molding, filament winding molding, and hand lay-up molding, so as to bond and integrate the resin material to the surface on the side of the primer layer of the composite laminate.
[14] The method for producing the metal-resin bonded article according to any one of the items [10] to [12], wherein the resin material is welded on the primer layer through at least one kind of a welding method selected from the group consisting of an ultrasonic welding method, a vibration welding method, an electromagnetic induction method, a high frequency method, a laser method, a thermal press method, and an injection welding method.

### Advantageous Effects of Invention

According to the present invention, a metal-resin bonded article that is capable of stably retaining a sufficient bonding strength for a long period of time, and a method for producing the same can be provided.

### Brief Description of Drawings

Fig. 1 is a cross sectional view schematically showing one embodiment of the composite laminate constituting the metal-resin bonded article of the present invention.
Fig. 2 is a cross sectional view schematically showing one embodiment of the metal-resin bonded article of the present invention.
Fig. 3 is a cross sectional view schematically showing another embodiment of the metal-resin bonded article of the present invention.

### Description of Embodiments

The metal-resin bonded article and the method for producing the same of the present invention will be described in detail.

The metal-resin bonded article of the present invention includes a composite laminate including a metal base material having laminated on a surface of the metal base material one layer or plural layers of a resin coating layer, and a resin material bonded and integrated thereto, the resin coating layer is laminated on a surface-treated surface of the metal base material, the bonding strength between the composite laminate and the resin material satisfies the following condition 1, and the adhesion force between the metal base material and the resin coating layer satisfies the following condition 2.

### (Condition 1)

The value evaluated by a tensile shear test according to the evaluation methods for the adhesion interface performance in plastic-metal assemblies of ISO 19095, after retaining the composite laminate and the resin material having been bonded and integrated to each other, under ordinary temperature and ordinary humidity for 24 to 48 hours, is 10 MPa or more.

### (Condition 2)

The values evaluated according to the crosscut test of JIS K5600_5_6, after retaining the composite laminate having been produced, under ordinary temperature and ordinary humidity for 24 to 48 hours, and after immersing the composite laminate having been produced, in warm water at 60°C for 24 hours, are both 0.

In the description herein, ordinary temperature and ordinary humidity mean "a temperature of 5 to 35°C and a relative humidity of 45 to 85%", and retaining under ordinary temperature and ordinary humidity is specifically preferably retaining in an air atmosphere of a temperature of 10 to 35°C and a relative humidity of 45 to 80%, and more preferably retaining in an air atmosphere of a temperature of 20 to 35°C and a relative humidity of 45 to 70%.

The metal-resin bonded article of the present invention satisfies the aforementioned conditions, and thereby can stably retain the sufficient bonding strength for a long period of time.

The evaluation of the condition 1 and the condition 2 above is not performed with a component actually used (such as an automobile component), but is performed with a test piece that is produced in the method of the present invention using a metal base material of the same kind and a resin material of the same kind.

### [Composite Laminate]

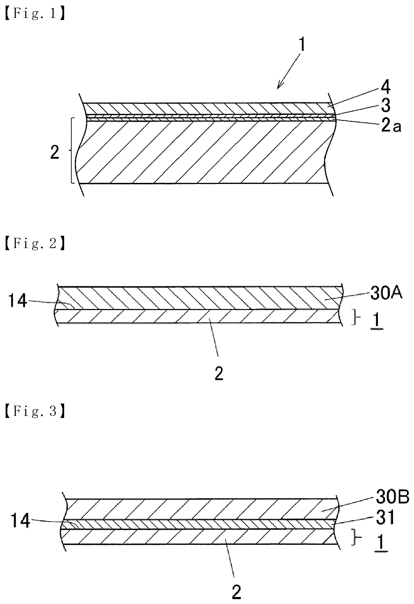

Fig. 1 schematically shows one embodiment of the composite laminate constituting the metal-resin bonded article of the present invention. A composite laminate 1 shown in Fig. 1 has a structure, in which a functional group adherent layer 3 is provided on a surface of a surface-treated part 2a formed on a surface of a metal base material 2, and a resin coating layer 4 is provided on a surface of the functional group adherent layer 3. The functional group adherent layer 3 may not be necessarily provided between the metal base material 2 and the resin coating layer 4. Accordingly, the resin coating layer 4 on the surface of the metal base material 2 may be laminated directly on the surface-treated part 2a.

### <Metal Base Material>

The metal base material 2 is not particularly limited in the metal species thereof.

Examples of the metal species of the metal base material 2 include aluminum, iron, titanium, magnesium, a stainless steel, and copper. Among these, aluminum is particularly favorably used from the standpoint of the lightweight property, the workability, and the like.

In the present invention, the word "aluminum" is used as the meaning that includes aluminum and alloys thereof. Similarly, iron, titanium, magnesium, and copper are also used as the meaning that includes the elemental substance and alloys thereof.

### <Surface-treated Part>

The surface-treated part 2a is formed on the surface of the metal base material 2. The surface-treated part 2a is assumed to be a part of the metal base material 2.

Examples of the formation method of the surface-treated part include a cleaning treatment with a solvent or the like (which may be hereinafter referred to as solvent cleaning), a degreasing treatment, a blast treatment, a grinding treatment, an etching treatment, a chemical conversion treatment, a plasma treatment, a corona discharge treatment, and an UV ozone treatment, and a surface treatment that forms hydroxy groups on the surface of the metal base material is preferred. The treatments may be used alone, or two or more kinds thereof may be performed in combination. The specific method of the surface treatment used may be a known method.

The surface treatments remove the contamination on the surface of the metal base material or roughen the surface of the metal base material 2 through the formation of fine unevenness intending to achieve an anchoring effect. The surface treatment can achieve the anchoring effect enhancing the adhesiveness between the surface of the metal base material 2 and the resin coating layer 4, and can contribute to the enhancement of the bondability to a bonding target of various materials (such as a metal material and an organic material).

Accordingly, in the production of the composite laminate 1, the metal base material 2 is subjected to the surface treatment before the formation of the resin coating layer 4.

The property of the surface of the metal base material 2 having been subjected to the surface treatment by the aforementioned method may be altered in some cases from immediately after the surface treatment due to the formation of the resin coating layer or the like on the surface-treated surface. Accordingly, it is considered that the expression that identifies the property of the surface-treated surface of the material layer is impossible or impractical. Therefore, in the present invention, the surface-treated surface of the material layer is identified by the method of the surface treatment.

The surface treatment in the case where the metal base material 2 is aluminum particularly preferably includes an etching treatment and/or a boehmite treatment.

For performing the surface treatment effectively, it is preferred that the surface of the metal base material before the surface treatment is degreased with an organic solvent, such as acetone.

The treatments of the surface treatments above may be performed by known methods. Specific examples of the treatment methods include the following methods.

### [Solvent Cleaning and Degreasing Treatment]

Examples of the solvent cleaning and the degreasing treatment include degreasing the surface of the metal base material with an organic solvent, such as acetone and toluene. The solvent cleaning and the degreasing treatment are preferably performed before the other surface treatments.

### [Blast Treatment]

### Examples of the blast treatment include shot blasting and sandblasting.

### [Grinding Treatment]

Examples of the grinding treatment include buff grinding using abrasive cloth, roll grinding using abrasive paper (sandpaper), and electrolytic grinding.

### [Etching Treatment]

Examples of the etching treatment include a chemical etching treatment, such as an alkali method, a phosphoric acid-sulfuric acid method, a fluoride method, a chromic acid-sulfuric acid method, and a salt iron method, and an electrochemical etching method, such as an electrolytic etching method.

The etching treatment in the case where the metal base material 2 is aluminum is preferably an alkali method using a sodium hydroxide aqueous solution or a potassium hydroxide aqueous solution, and particularly preferably a caustic soda method using a sodium hydroxide aqueous solution.

The alkali method may be performed, for example, by dipping the aluminum base material in an aqueous solution of sodium hydroxide or potassium hydroxide having a concentration of 3 to 20% by mass at 20 to 70°C for 1 to 15 minutes. An additive, such as a chelating agent, an oxidizing agent, and a phosphate salt, may be added. After dipping, the base material is preferably neutralized with a nitric acid aqueous solution of 5 to 20% by mass (desmutting), washed with water, and dried.

### [Chemical Conversion Treatment]

The chemical conversion treatment forms a chemical film as the surface-treated part 2a mainly on the surface of the metal base material 2.

Examples of the chemical conversion treatment in the case where the metal base material 2 is aluminum include a boehmite treatment and a zirconium treatment, and a boehmite treatment is particularly preferred.

In the boehmite treatment, the aluminum base material is subjected to a hydrothermal treatment to form a boehmite film on the surface of the base material. A reaction accelerator, such as ammonia and triethanolamine, may be added to water. For example, it is preferred that the aluminum base material is dipped in hot water at 90 to 100°C containing triethanolamine in a concentration of 0.1 to 5.0% by mass for 3 seconds to 5 minutes.

In the zirconium treatment, the aluminum base material is dipped, for example, in a liquid containing a zirconium salt, such as zirconium phosphate, to form a film of a zirconium compound on the surface of the base material. For example, it is preferred that the aluminum base material is dipped in a liquid of a chemical agent for a zirconium treatment (for example, "Palcoat 3762" and "Palcoat 3796", produced by Nihon Parkerizing Co., Ltd.) at 45 to 70°C for 0.5 to 3 minutes. The zirconium treatment is preferably performed after the etching treatment by the caustic soda method.

### [Plasma Treatment]

The plasma treatment is to render the material surface in a sensitive state through excitation of the molecules thereof by hitting the surface with a plasma beam created with a high voltage power supply and a rod, and examples thereof include an atmospheric plasma treatment method capable of applying hydroxy groups and polar groups onto the material surface.

### [Corona Discharge Treatment]

Examples of the corona discharge treatment include a method applied to surface modification of a polymer film, which may be a method of generating hydroxy groups or polar groups on the surface from starting points, which are radicals generated through scission of the polymer main chain or side chain of the polymer surface layer with electrons emitted from an electrode.

### [UV Ozone Treatment]

The UV ozone treatment is a method of cleaning or modifying the surface with the energy of an ultraviolet ray having a short wavelength emitted from a low pressure mercury lamp and the power of ozone (O₃) generated thereby. For glass materials, the treatment may be one of surface cleaning methods for removing the organic impurities on the surface. In general, a surface cleaning and modifying equipment using a low pressure mercury lamp is referred to as an "UV ozone cleaner", an "UV cleaning device", an "ultraviolet ray surface modifier", or the like.

### <Functional Group Adherent Layer>

It is also preferred that a functional group adherent layer 3 is laminated between and in contact with the surface of the metal base material 2 and the resin coating layer 4. The functional group adherent layer 3 is a layer having a functional group introduced from at least one kind selected from the group consisting of a silane coupling agent, an isocyanate compound, and a thiol compound.

The layer having a functional group that is formed between the surface of the metal base material 2 and the resin coating layer 4 can provide an effect of enhancing the adhesiveness between the surface of the metal base material 2 and the resin coating layer 4 through the chemical bond formed by reacting the functional group, and also can contribute to the enhancement of the bondability to a bonding target.

Accordingly, it is preferred that in the production of the composite laminate 1, before the formation of the resin coating layer 4, the surface-treated surface of the metal base material 2 is treated with at least one kind selected from the group consisting of a silane coupling agent, an isocyanate compound, and a thiol compound, so as to form the functional group adherent layer 3.

The metal base material 2 can have, due to the surface-treated part 2a formed thereon, enhanced adhesiveness between the surface of the metal base material 2 and the resin coating layer 4 and enhanced bondability to a bonding target through the synergistic effect of the anchoring effect through the fine unevenness of the surface-treated part 2a and the chemical bond formed by reacting the functional group of the functional group adherent layer 3.

The method of forming the functional group adherent layer 3 (which may be hereinafter referred to as application of functional groups) with the silane coupling agent, the isocyanate compound, or the thiol compound is not particularly limited, and examples thereof include a spray coating method and a dipping method. Specifically, for example, such a method may be employed that the metal base material is dipped in a solution of the silane coupling agent or the like having a concentration of 5 to 50% by mass at ordinary temperature to 100°C for 1 minute to 5 days, and then dried at ordinary temperature to 100°C for 1 minutes to 5 hours.

### [Silane Coupling Agent]

The silane coupling agent used may be, for example, a known one that is used for a surface treatment of glass fibers or the like. A silanol group formed through hydrolysis of the silane coupling agent or a silanol group obtained through oligomerization thereof is reacted with and bonded to the hydroxy group existing on the surface of the metal base material 2, and thereby the functional group based on the structure of the silane coupling agent capable of chemically bonding to the resin coating layer 4 and the bonding target can be imparted to (introduced to) the metal base material 2.

The silane coupling agent is not particularly limited, and examples thereof include vinyltrimethoxysilane, vinyltriethoxysilane, 2-(3,4-epoxycyclohexyl)ethyltrimethoxysilane, 3-glycidoxypropylmethyldimethoxysilane, 3-glycidoxypropylmethyltrimethoxysilane, 3-glycidoxypropylmethyldiethoxysilane, 3-glycidoxypropylmethyldiethoxysilane, 3-glycidoxypropyltriethoxysilane, p-stylyltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, a hydrochloride of N-(vinylbenzyl)-2-aminopropyltrimethoxysilane, tris(trimethoxysilylpropyl) isocyanurate, 3-ureidopropyltrialkoxysilane, 3-mercaptopropylmethyldimethoxysilane, 3-isocyanatopropyltriethoxysilane, and dithioltriazinepropyltriethoxysilane. These compounds may be used alone or as a combination of two or more kinds thereof.

### [Isocyanate Compound]

The isocyanate compound can impart (introduce) the functional group based on the structure of the isocyanate compound capable of chemically bonding to the resin coating layer 4 and the bonding target to the metal base material 2 through reaction and bonding of the isocyanato group in the isocyanate compound with the hydroxy group existing on the surface of the metal base material 2.

The isocyanate compound is not particularly limited, and examples thereof include a polyfunctional isocyanate, such as diphenylmethane diisocyanate (MDI), hexamethylene diisocyanate (HDI), tolylene diisocyanate (TDI), and isophorone diisocyanate (IPDI), and also include an isocyanate compound having a radically reactive group, such as 2-isocyanatoethyl methacrylate (e.g., "Karenz MOI (registered trademark)", produced by Showa Denko K.K.), 2-isocyanatoethyl acrylate (e.g., "Karenz AOI (registered trademark)" and "Karenz AOI-VM (registered trademark)", produced by Showa Denko K.K.), and 1,1-(bisacryloyloxyethyl)ethyl isocyanate (e.g., "Karenz BEI (registered trademark)", produced by Showa Denko K.K.).

### [Thiol Compound]

The thiol compound can impart (introduce) the functional group based on the structure of the thiol compound capable of chemically bonding to the resin coating layer 4 and the bonding target to the metal base material 2 through reaction and bonding of the mercapto group (thiol group) in the thiol compound with the hydroxy group existing on the surface of the metal base material 2.

The thiol compound is not particularly limited, and examples thereof include pentaerythritol tetrakis(3-mercaptopropionate) (e.g., "QX40", produced by Mitsubishi Chemical Corporation and "QE-340M", produced by Toray Fine Chemicals Co., Ltd.), an ether based primary thiol (e.g., "Cupcure 3-800", produced by Cognis GmbH), 1,4-bis(3-mercaptobutyryloxy)butane (e.g., "Karenz MT (registered trademark) BD1", produced by Showa Denko K.K.), pentaerythritol tetrakis(3-mercaptobutyrate) (e.g., "Karenz MT (registered trademark) PE1", produced by Showa Denko K.K.), and 1,3,5-tris(3-mercaptobutyloxyethyl)-1,3,5-triazin-2,4,6-(1H,3H,5H)-trione (e.g., "Karenz MT (registered trademark) NR1", produced by Showa Denko K.K.).

### <Resin Coating Layer>

The resin coating layer 4 is laminated on the surface-treated surface of the metal base material 2, i.e., the surface of the surface-treated part 2a of the metal base material 2, or alternatively may be laminated on the surface of the functional group adherent layer 3.

The resin coating layer 4 may be constituted by one layer or may be constituted by plural layers including two or more layers.

The resin coating layer 4 is formed on the surface-treated surface of the metal base material 2 with excellent adhesiveness, with which the surface of the metal base material 2 is protected, and the attachment of contamination and the degradation, such as oxidation, on the surface of the metal base material 2 can be suppressed.

The resin coating layer 4 can impart excellent bondability to the bonding target of various materials (such as an organic material and a composite material), particularly to a resin material, to the surface of the metal base material 2. Furthermore, the composite laminate can be obtained that can retain the state capable of providing excellent adhesiveness for a long period of several months in the state where the surface of the metal base material 2 is protected.

In the composite laminate 1, as described above, the resin coating layer 4 can impart excellent bondability to the bonding target of various materials (such as an organic material and a composite material) to the metal base material 2, and therefore the resin coating layer 4 can be assumed to be a primer layer of the composite laminate 1.

The primer layer referred herein means a layer that intervenes between the metal base material 2 and the bonding target and enhances the bondability between the metal base material 2 and the bonding target in the case where the metal base material 2 is bonded and integrated to the bonding target, such as a resin material, for example, in the metal-resin bonded article described later.

### <Embodiment of Resin Coating Layer>

In one embodiment, at least one layer of the resin coating layer contains a resin composition containing a polyaddition linear chain polymer having a combination of polyaddition reactive compounds forming a linear chain polymer as constitutional components, and the combination of polyaddition reactive compounds is at least one of the following items (1) and (2).
(1) At least one compound selected from the group consisting of a bifunctional glycol compound, a bifunctional amino compound, and a bifunctional thiol compound, and a bifunctional isocyanate compound
(2) At least one compound selected from the group consisting of a bifunctional carboxy compound and a bifunctional thiol compound, and a bifunctional epoxy compound
   The combination may also be a combination of three or more kinds, such as at least one of the following items (3) and (4).
(3) At least two compounds selected from the group consisting of a bifunctional glycol compound, a bifunctional amino compound, and a bifunctional thiol compound, and a bifunctional isocyanate compound
(4) A bifunctional carboxy compound and a bifunctional thiol compound, and a bifunctional epoxy compound

In the description herein, the resin composition means a mixture of a polymer formed through polymerization of a polyaddition reactive composition or a radically polymerizable composition, and an additive and the like.

The polyaddition reaction of at least one of the combinations of the items (1) and (2) provides a linear chain polymer having a thermoplastic structure, i.e., a linear polymer structure. The linear polymer herein means a polymer that has a one-dimensional linear chain form containing no crosslinked structure in the polymer molecule. Accordingly, the polyaddition reaction of at least one of the combinations of the items (1) and (2) provides the resin coating layer 4 formed of a resin having thermoplasticity, as being different from a thermosetting resin constituting a three-dimensional structure through a crosslinked structure. The resin composition obtained through the polyaddition reaction has these characteristics, and thereby can form the resin coating layer 4 excellent in adhesiveness to the metal base material 2 and can provide excellent bondability between the resin coating layer 4 and the bonding target.

Accordingly, in the production of the composite laminate 1, it is preferred that the polyaddition reaction of at least one of the combinations of the items (1) and (2) is performed on the surface-treated surface of the metal base material 2, so as to form at least one layer of the resin coating layer 4.

The polyaddition reaction is preferably performed on the surface of the functional group adherent layer. The resin coating layer 4 that is formed according to this embodiment has excellent adhesiveness to the metal base material 2 and also has excellent bondability to the bonding target.

The coating method for forming the resin coating layer 4 with the resin composition is not particularly limited, and examples thereof include a spray coating method and a dipping method.

In the procedure of the polyaddition reaction of at least one of the combinations of the items (1) and (2), the condition for performing the polyaddition reaction, the molecular weight distribution obtained thereby, and the like may vary depending on the functional groups to be combined, and the specific embodiments based on the combinations thereof cannot be comprehensively expressed. Accordingly, it is considered that the direct identification of the resin coating layer formed through the polyaddition reaction of at least one of the combinations of the items (1) and (2) by the structure or characteristics thereof is impossible or impractical.

The polyaddition reactive composition containing the combination of polyaddition reactive compounds as a constitutional component may contain a solvent and depending on necessity additives, such as a colorant, for sufficiently performing the polyaddition reaction to form the target resin coating layer. In this case, in the components other than the solvent contained in the resin composition, the polyaddition reactive compounds preferably constitute a major component. The major component herein means that the content of the polyaddition reactive compounds obtained by summating the polyaddition reactive compounds constituting the combination is 50 to 100% by mass. The content is preferably 60% by mass or more, and more preferably 80% by mass or more.

In the description herein, the polyaddition reactive composition means a mixture of the combination of the polyaddition reactive compounds, the catalyst, the solvent, and the like.

The bifunctional glycol compound is a compound that has two hydroxy groups, and examples thereof include an aliphatic glycol, such as ethylene glycol, propylene glycol, diethylene glycol, and 1,6-hexanediol. Among these, propylene glycol, diethylene glycol, and the like are preferred from the standpoint of the toughness of the primer.

The bifunctional amino compound is a compound that has two amino groups, and examples thereof include a bifunctional aliphatic diamine and a bifunctional aromatic diamine. Examples of the aliphatic diamine include ethylenediamine, 1,2-propanediamine, 1,3-propanediamine, 1,4-diaminobutane, 1,6-hexamethylenediamine, 2,5-dimethyl-2,5-hexanediamine, 2,2,4-trimethylhexamethylenediamine, isophoronediamine, bis(4-amino-3-methylcyclohexyl)methane, 1,3-diaminocyclohexane, and N-(2-aminoethyl)piperazine, and examples of the aromatic diamine include diaminodiphenylmethane and diaminodiphenylpropane. Among these, 1,3-propanediamine, 1,4-diaminobutane, and 1,6-hexamethylenediamine are preferred from the standpoint of the toughness of the primer.

The bifunctional thiol compound is a compound that has two mercapto groups in the molecule, and examples thereof include a bifunctional secondary thiol compound, such as 1,4-bis(3-mercaptobutylyloxy)butane (e.g., "Karenz MT (registered trademark) BD1", produced by Showa Denko K.K.).

The bifunctional isocyanate compound is a compound that has two isocyanato groups, and examples thereof include a diisocyanate compound, such as hexamethylene diisocyanate, tetramethylene diisocyanate, dimer acid diisocyanate, 2,4- or 2,6-tolylene diisocyanate (TDI) and a mixture thereof, p-phenylene diisocyanate, xylylene diisocyanate, and diphenylmethane diisocyanate (MDI). Among these, TDI and MDI are preferred from the standpoint of the strength of the primer.

It suffices that the bifunctional carboxy compound is a compound that has two carboxy groups, and examples thereof include oxalic acid, malonic acid, succinic acid, glutaric acid, adipic acid, maleic acid, fumaric acid, isophthalic acid, and terephthalic acid. Among these, isophthalic acid, terephthalic acid, adipic acid, and the like are preferred from the standpoint of the strength and the toughness of the primer.

The bifunctional epoxy compound is a compound that has two epoxy groups in one molecule. Examples thereof include an aromatic epoxy resin, such as a bisphenol A type epoxy resin, a bisphenol F type epoxy resin, a bisphenol S type epoxy resin, a bisphenol type epoxy resin, and a naphthalene type bifunctional epoxy resin, and an aliphatic epoxy compound, such as 1,6-hexanediol glycidyl ether.

These compounds may be used alone or as a combination of two or more kinds thereof.

Specific examples thereof include "jER (registered trademark) 828", "jER (registered trademark) 834", "jER (registered trademark) 1001", "jER (registered trademark) 1004", and "jER (registered trademark) YX-4000", produced by Mitsubishi Chemical Corporation. In addition, an epoxy compound having an atypical structure that is bifunctional may also be used. These compounds may be used alone or as a combination of two or more kinds thereof.

The mixing ratio of the bifunctional isocyanate compound and the bifunctional glycol compound (polyurethane) is preferably such a value that provides a -OH/-NCO equivalent ratio in a range of 0.7 to 1.5.

Examples of the urethanation catalyst used in the two-component catalyst curing type include an amine based catalyst and an organic tin based catalyst. The amine based catalyst is not particularly limited, and examples thereof include triethylenediamine, tetramethylguanidine, N,N,N',N'-tetramethylhexane-1,6-diamine, dimethyl ether amine, N,N,N',N",N"-pentamethyldipropylenetriamine, N-methylmorpholine, bis(2-dimethylaminoethyl) ether, dimethylamnoethoxyethanol, and triethylamine. The organic tin based catalyst is not particularly limited, and examples thereof include dibutyltin diacetate, dibutyltin dilaurate, dibutyltin thiocarboxylate, and dibutyltin dimaleate. In general, the urethanation catalyst is preferably mixed in an amount of 0.01 to 10 parts by mass per 100 parts by mass of the bifunctional glycol component.

The mixing ratio of the bifunctional isocyanate compound and the bifunctional amino compound (polyurea) is preferably such a value that provides a -NH₂/-NCO equivalent ratio in a range of 0.7 to 1.5. No particular reaction catalyst is required.

The mixing ratio of the bifunctional isocyanate compound and the bifunctional thiol compound is preferably such a value that provides a -SH/-NCO equivalent ratio in a range of 0.7 to 1.5.

The reaction catalyst used may be a tertiary amine or a phosphorus based compound. Examples thereof include triethylamine, 2,4,6-tris(dimethylaminomethyl)phenol, and triphenylphosphine. The urethanation catalysts shown above may also be used.

The mixing ratio of the bifunctional epoxy compound and the bifunctional carboxy compound is preferably such a value that provides a -COOH/epoxy equivalent ratio in a range of 0.7 to 1.5.

The reaction catalyst used may be a tertiary amine or a phosphorus based compound. Examples thereof include triethylamine, 2,4,6-tris(dimethylaminomethyl)phenol, and triphenylphosphine. The urethanation catalysts shown above may also be used.

The mixing ratio of the bifunctional epoxy compound and the bifunctional thiol compound is preferably such a value that provides a -SH/epoxy equivalent ratio in a range of 0.7 to 1.5.

The reaction catalyst used may be a tertiary amine or a phosphorus based compound. Examples thereof include triethylamine, 2,4,6-tris(dimethylaminomethyl)phenol, and triphenylphosphine. The urethanation catalysts shown above may also be used.

The polyaddition reaction is preferably performed at ordinary temperature to 200°C for 5 to 120 hours under heating while depending on the kinds of the reaction compounds and the like. Specifically, the thermoplastic resin layer formed of the polyaddition reactive compounds can be formed in such a manner that the polyaddition reactive composition is coated on the metal base material, and then after evaporating the solvent appropriately, heated to perform the polyaddition reaction.

### <Another Embodiment of Resin Coating Layer>

In another embodiment, at least one layer of the resin coating layer 4 is formed of a resin composition containing a linear chain polymer, which is a radical homopolymer or a radical copolymer of a monofunctional monomer having an unsaturated group.

The radical (co)polymerization of the monofunctional monomer forms a thermoplastic structure, i.e., a linear polymer structure. Accordingly, the resin coating layer 4 formed of a resin having thermoplasticity can be formed, as being different from a thermosetting resin constituting a three-dimensional structure through a crosslinked structure. The radically polymerizable composition containing the radically polymerizable compound forming the linear chain polymer through radical homopolymerization or radical copolymerization of the monofunctional monomer having an unsaturated group has these characteristics, and thereby can form the resin coating layer 4 excellent in adhesiveness to the metal base material 2 and can provide excellent bondability between the resin coating layer 4 and the bonding target.

Accordingly, in the production of the composite laminate 1, it is preferred that the radical polymerization reaction of the radically polymerizable compound is performed on the surface-treated surface of the metal base material 2, so as to form at least one layer of the resin coating layer 4.

The radical polymerization reaction is preferably performed on the surface of the functional group adherent layer. The resin coating layer 4 that is formed according to this embodiment has excellent adhesiveness to the metal base material 2 and also has excellent bondability to the bonding target.

The method for coating the radically polymerizable composition on the surface of the metal base material 2 is not particularly limited, and examples thereof include a spray coating method and a dipping method.

In the description herein, the radically polymerizable composition means a mixture of the monofunctional monomer having an unsaturated group, a catalyst, a solvent, and the like.

The radical reaction of the monofunctional monomer widely varies depending on the kind of the polymerization initiator and the reaction condition, and the specific embodiment based on the combinations thereof cannot be comprehensively expressed. Accordingly, it is considered that the direct identification of the resin coating layer formed through the radical reaction of the monofunctional monomer by the structure or characteristics thereof is impossible or impractical.

The radically polymerizable composition may contain a solvent and depending on necessity additives, such as a colorant, for sufficiently performing the radical polymerization reaction to form the target resin coating layer. In this case, in the components other than the solvent contained in the radically polymerizable composition, the radically polymerizable compound preferably constitutes a major component. The major component herein means that the content of the radically polymerizable compound is 50 to 100% by mass. The content is preferably 60% by mass or more, and more preferably 80% by mass or more.

The monofunctional monomer having an unsaturated group is a monomer that has one ethylenic unsaturated bond. Examples thereof include a styrene based monomer, such as styrene monomer, α-, o-, m-, and p-alkyl, nitro, cyano, amido, and ester derivatives of styrene, chlorostyrene, vinyltoluene, and divinylbenzene; and a (meth)acrylate ester compound, such as ethyl (meth)acrylate, methyl (meth)acrylate, n-propyl (meth)acrylate, isopropyl (meth)acrylate, hexyl (meth)acrylate, 2-ethylhexyl (meth)acrylate, lauryl (meth)acrylate, dodecyl (meth)acrylate, cyclopentyl (meth)acrylate, cyclohexyl (meth)acrylate, tetrahydrofuryl (meth)acrylate, acetoacetoxyethyl (meth)acrylate, dicyclopentenyloxyethyl (meth)acrylate, and phenoxyethyl (meth)acrylate. Among these, a combination including styrene, methyl (meth)acrylate, 2-ethylhexyl (meth)acrylate, and phenoxyethyl (meth)acrylate is preferred from the standpoint of the strength and the toughness of the primer.

As a polymerization initiator for the radical polymerization reaction of the radically polymerizable compound, for example, an organic peroxide compound, a photoinitiator, and the like having been known may be preferably used. An ordinary temperature radical polymerization initiator having a combination of an organic peroxide compound and a cobalt salt or an amine compound may also be used. Examples of the organic peroxide compound include compounds classified into a ketone peroxide, a peroxyketal, a hydroperoxide, a diallyl peroxide, a diacyl peroxide, a peroxyester, and a peroxydicarbonate. The photoinitiator used is preferably a compound capable of initiating the polymerization with an ultraviolet ray to visible light.

The radical polymerization reaction is preferably performed at ordinary temperature to 200°C for 5 to 90 minutes under heating while depending on the kinds of the reaction compounds and the like. In a case of photo-curing, the polymerization reaction is performed by irradiation with ultraviolet rays or visible light. Specifically, the thermoplastic resin layer formed of the radically polymerizable compound can be formed in such a manner that the resin composition is coated, and then heated to perform the radical polymerization reaction.

### (Thermosetting Resin)

In the case where the resin coating layer 4 includes plural layers, at least one layer thereof is also preferably a layer formed of a cured product of a resin composition including a thermosetting resin (which may be hereinafter referred to as a thermosetting resin layer). Examples of the thermosetting resin include a urethane resin, an epoxy resin, a vinyl ester resin, and an unsaturated polyester resin.

In the case where the thermosetting resin layer includes plural layers, the layers each may be formed of one kind of the resins alone or may be formed of a mixture of two or more kinds thereof. In alternative, the thermosetting resin layer includes two or more layers of different kinds.

The resin coating layer 4 that has a laminated structure of the resin coating layer having the linear polymer structure having thermoplasticity and the thermosetting resin layer can constitute the composite laminate 1 coated with the resin coating layer 4 that has various characteristics including the strength, the impact resistance, and the like derived from the thermosetting resin.

The order of the lamination of the thermosetting resin layer and the resin coating layer having the linear polymer structure having thermoplasticity is not particularly limited, and in the case where the composite laminate 1 intends to bond the metal base material 2 to the bonding target, the resin coating layer having the linear polymer structure having thermoplasticity is preferably laminated to become the outermost surface of the resin coating layer 4 from the standpoint of the achievement of excellent bondability to the bonding target.

The coating method for forming at least one layer of the resin coating layer 4 with the resin composition containing the thermosetting resin is not particularly limited, and examples thereof include a spray coating method and a dipping method.

The resin composition may contain a solvent and depending on necessity additives, such as a colorant, for sufficiently performing the curing reaction of the thermosetting resin to form the target resin coating layer. In this case, in the components other than the solvent contained in the resin composition, the thermosetting resin is preferably a major component. The major component herein means that the content of the thermosetting resin is 50 to 100% by mass. The content is preferably 60% by mass or more, and more preferably 80% by mass or more.

The thermosetting resin referred in the present invention means widely a resin that is cured through crosslinking, and is not limited to a thermal curing type, but encompasses an ordinary temperature curing type and a photocuring type. The photocuring type can be cured within a short period of time through irradiation of visible light or an ultraviolet ray. The photocuring type may be used in combination with the thermal curing type and/or the ordinary temperature curing type. Examples of the photocuring type include a vinyl ester resin, such as "Ripoxy (registered trademark) LC-760" and "Ripoxy (registered trademark) LC-720", produced by Showa Denko K.K.

### [Urethane Resin]

The urethane resin is generally a resin obtained through reaction of an isocyanato group and a hydroxy group, and is preferably a urethane resin that corresponds to the definition in ASTM D16 "coating containing polyisocyanate having vehicle nonvolatile content of 10 wt% or more". The urethane resin may be either a one-component type or a two-component type.

Examples of the one-component type urethane resin include an oil modification type (cured through oxidation polymerization of an unsaturated fatty acid group), a moisture curing type (cured through reaction of an isocyanato group and water in air), a block type (cured through reaction of an isocyanato group formed by dissociation of a block agent under heat and a hydroxy group), and a lacquer type (cured through drying by evaporation of a solvent). Among these, a moisture curing one-component type urethane resin is preferably used from the standpoint of the handleability and the like. Specific examples thereof include "UM-50P", produced by Showa Denko K.K.

Examples of the two-component type urethane resin include a catalyst curing type (cured through reaction of an isocyanato group and water in air or the like in the presence of a catalyst) and a polyol curing type (cured through reaction of an isocyanato group and a hydroxy group of a polyol compound).

Examples of the polyol compound in the polyol curing type include a polyester polyol, a polyether polyol, and a phenol resin.

Examples of the isocyanate compound having an isocyanato group in the polyol curing type include an aliphatic isocyanate, such as hexamethylene diisocyanate (HDI), tetramethylene diisocyanate, and a dimer acid diisocyanate; an aromatic isocyanate, such as 2,4- or 2,6-tolylene diisocyanate (TDI) or a mixture thereof, p-phenylene diisocyanate, xylylene diisocyanate, and diphenylmethane diisocyanate (MDI) and polymeric MDI, which is a polynuclear mixture thereof; and an alicyclic isocyanate, such as isophorone diisocyanate (IPDI).

The mixing ratio of the polyol compound and the isocyanate compound in the polyol curing two-component type urethane resin is preferably in a range of 0.7 to 1.5 in terms of molar equivalent ratio of (hydroxy group)/(isocyanato group).

Examples of the urethanation catalyst used in the two-component type urethane resin include an amine based catalyst, such as triethylenediamine, tetramethylguanidine, N,N,N',N'-tetramethylhexane-1,6-diamine, dimethyl ether amine, N,N,N',N",N"-pentamethyldipropylenetriamine, N-methylmorpholine, bis(2-dimethylaminoethyl) ether, dimethylaminoethoxyethanol, and triethylamine; and organotin based catalyst, such as dibutyltin diacetate, dibutyltin dilaurate, dibutyltin thiocarboxylate, and dibutyltin dimaleate.

In the polyol curing type, in general, the urethanation catalyst is preferably mixed in an amount of 0.01 to 10 parts by mass per 100 parts by mass of the polyol compound.

### [Epoxy Resin]

The prepolymer of the epoxy resin before curing is a compound having at least two epoxy groups in one molecule.

Examples of the prepolymer before curing of the epoxy resin include an ether based bisphenol type epoxy resin, a novolac type epoxy resin, a polyphenol type epoxy resin, an aliphatic type epoxy resin, an ester based aromatic epoxy resin, an alicyclic epoxy resin, and an ether-ester based epoxy resin, and among these, a bisphenol A type epoxy resin is preferably used. These may be used alone or as a combination of two or more kinds thereof.

Specific examples of the bisphenol A type epoxy resin include "jER (registered trademark) 828" and "jER (registered trademark) 1001", produced by Mitsubishi Chemical Corporation.

Specific examples of the novolac type epoxy resin include "D.E.N. (registered trademark) 438 (registered trademark)", produced by The Dow Chemical Company.

Examples of the curing agent used for the epoxy resin include known curing agents, such as an aliphatic amine, an aromatic amine, an acid anhydride, a phenol resin, a thiol compound, an imidazole compound, and a cationic catalyst. The curing agent as a combination with a long-chain aliphatic amine and/or a thiol compound can provide the effect of providing a large elongation and excellent impact resistance.

Specific examples of the thiol compound include the same compounds as exemplified for the thiol compound in the surface treatment above. Among these, pentaerythritol tetrakis(3-mercaptobutyrate) (e.g., "Karenz MT (registered trademark) PE1", produced by Showa Denko K.K.) is preferred from the standpoint of the elongation and the impact resistance.

### [Vinyl Ester Resin]

The vinyl ester resin contains a vinyl ester compound dissolved in a polymerizable monomer (such as styrene). The vinyl ester resin is also referred to as an epoxy (meth)acrylate resin, and encompasses a urethane (meth)acrylate resin.

As the vinyl ester resin, for example, those described in "Polyester Jushi Handbook" (Polyester Resin Handbook) (published by Nikkan Kogyo Shimbun, Ltd., 1988), "Toryo Yougo Jiten" (Paint Terminological Dictionary) (published by Japan Society of Colour Material, 1993), and the like can be used, and specific examples thereof include "Ripoxy (registered trademark) R-802", "Ripoxy (registered trademark) R-804", and "Ripoxy (registered trademark) R-806", produced by Showa Denko K.K.

Examples of the urethane (meth)acrylate resin include a radical polymerizable unsaturated group-containing oligomer obtained in such a manner that an isocyanate compound and a polyol compound are reacted, and then a hydroxy group-containing (meth)acryl monomer (and depending on necessity a hydroxy group-containing allyl ether monomer) is reacted therewith. Specific examples thereof include "Ripoxy (registered trademark) R-6545", Showa Denko K.K.

The vinyl ester resin can be cured through radical polymerization by heating in the presence of a catalyst, such as an organic peroxide.

The organic peroxide is not particularly limited, and examples thereof include a ketone peroxide compound, a peroxyketal compound, a hydroperoxide compound, a diallylperoxide compound, a diacylperoxide compound, a peroxyester compound, and a peroxydicarbonate compound. The curing can be performed at ordinary temperature by combining these compounds with a cobalt metal salt or the like.

The cobalt metal salt is not particularly limited, and examples thereof include cobalt naphthenate, cobalt octylate, and cobalt hydroxide. Among these, cobalt naphthenate and/or cobalt octylate are preferred.

### [Unsaturated Polyester Resin]

The unsaturated polyester resin contains a polycondensation product (i.e., unsaturated polyester) obtained through esterification reaction of a polyol compound and an unsaturated polybasic acid (and depending on necessity a saturated polybasic acid), dissolved in a polymerizable monomer (such as styrene).

As the unsaturated polyester resin, for example, those described in "Polyester Jushi Handbook" (Polyester Resin Handbook) (published by Nikkan Kogyo Shimbun, Ltd., 1988), "Toryo Yougo Jiten" (Paint Terminological Dictionary) (published by Japan Society of Colour Material, 1993), and the like can be used, and specific examples thereof include "Rigolac (registered trademark)", produced by Showa Denko K.K.

The unsaturated polyester resin can be cured through radical polymerization by heating in the presence of a catalyst, as similar to the vinyl ester resin.

### [Metal-Resin Bonded Article]

The metal-resin bonded article of the present invention includes the composite laminate 1, the resin coating layer 4 of which is the primer layer as described above, and a resin material bonded and integrated to the surface on the side of the primer layer.

Fig. 2 shows one embodiment of the metal-resin bonded article of the present invention. A metal-resin bonded article shown in Fig. 2 has a composite laminate 1 and a resin material as a bonding target 30A that is in direct contact with and is bonded and integrated to a surface 14 on the side of the resin coating layer (primer layer) of the composite laminate 1.

As described above, the surface of the primer layer has excellent bondability to a bonding target of various materials (such as a metal material and an organic material), particularly a resin material, and therefore a metal-resin bonded article including the metal base material 2 and the resin material, which are bonded to each other with a high strength, can be favorably obtained.

The thickness (dry thickness) of the primer layer may depend on the material of the bonding target and the contact area of the bonding part, and is preferably 1 pm to 10 mm, more preferably 2 pm to 8 mm, and further preferably 3 pm to 5 mm, from the standpoint of the achievement of the excellent bondability between the surface on the side of the primer layer and the resin material.

The metal-resin bonded article tends to cause thermal deformation in the process of cooling to room temperature after bonding, depending on the heating temperature in bonding, due to the difference of the thermal expansion coefficients of the metal base material 2 and the bonding target 30A. From the standpoint of the suppression and relief of the thermal deformation, a portion having characteristics with a large elongation having a prescribed thickness is preferably provided between the metal base material 2 and the bonding target 30A. The prescribed thickness can be obtained in consideration of the temperature change in bonding (i.e., the temperature change from the heating temperature in bonding to the cooling to room temperature) and the properties, such as the elongation, of the primer layer.

For example, in the case where an aluminum base material and a carbon fiber-reinforced resin (CFRP) are bonded and integrated to each other, the thickness of the primer layer is preferably 0.1 to 10 mm, more preferably 0.2 to 8 mm, and further preferably 0.5 to 5 mm.

Fig. 3 shows another embodiment of the metal-resin bonded article of the present invention. A metal-resin bonded article shown in Fig. 3 has a composite laminate 1 and a resin material as a bonding target 30B that is bonded and integrated to a surface 14 on the side of the resin coating layer (primer layer) of the composite laminate 1 through an adhesive 31.

As described above, a metal-resin bonded article including the metal base material 2 and the resin material, which are bonded to each other with a high adhesion strength, can be obtained by using the adhesive 31 depending on the kind of the resin material as the bonding target 30B.

The adhesive 31 can be appropriately selected depending on the kind of the resin material as the bonding target 30B, and known adhesives, such as an epoxy resin type, a urethane resin type, and a vinyl ester resin type, can be used.

The metal-resin bonded article tends to cause thermal deformation in the process of cooling to room temperature after bonding, depending on the heating temperature in bonding, due to the difference of the thermal expansion coefficients of the metal base material 2 and the bonding target 30B. From the standpoint of the suppression and relief of the thermal deformation, the thickness of the adhesive layer 31 is preferably such a value that provides a total thickness of the primer layer and the adhesive layer 31 of 0.5 mm or more, and a portion having characteristics with a large elongation having a prescribed thickness is preferably provided between the metal base material 2 and the bonding target 30B. The total thickness can be determined in consideration of the temperature change in bonding (i.e., the temperature change from the heating temperature in bonding to the cooling to room temperature) and the properties, such as the elongation, of the primer layer and the adhesive layer.

The resin material in the metal-resin bonded article is not particularly limited, and may be an ordinary synthetic resin. Examples thereof include resins used in an automobile component, such as a polycarbonate resin (Example 1), a polyester resin, a polybutylene terephthalate resin (Examples 2, 3, 4, and 6), and a polyetherimide resin (Example 5). Examples thereof also include a carbon fiber-reinforced resin (CFRP), such as a press molded article using carbon fibers, e.g., a sheet molding compound (SMC) and a bulk molding compound (BMC), and a glass fiber-reinforced resin (GFRP).

The SMC described above is a sheet-like molded article obtained by impregnating reinforcing fibers, such as carbon fibers, with a mixture of an unsaturated polyester resin and/or a vinyl ester resin, a polymerizable unsaturated monomer, a curing agent, a shrinkage preventing agent, a filler, and the like.

As the method for producing the metal-resin bonded article, it is possible that the composite laminate 1 and the molded article of the resin material are separately produced, and bonded and integrated to each other through adhesion. For example, the metal-resin bonded article can be obtained by welding the molded article of the resin material to the primer layer of the composite laminate 1 through at least one kind selected from the group consisting of an ultrasonic welding method, a vibration welding method, an electromagnetic induction method, a high frequency method, a laser method, and a thermal press method. Among these welding methods, an ultrasonic welding method, an electromagnetic induction method, and a laser method are preferred.

The resin material may be bonded and integrated with the composite laminate 1 simultaneously with the molding of the resin material. Specifically, the metal-resin bonded article may be obtained in such a manner that the resin material is bonded and integrated to the surface on the side of the primer layer of the composite laminate 1 in molding the resin material by a method, such as injection molding, press molding, filament winding molding, hand lay-up molding, and transfer molding. Among these molding methods, injection molding, press molding, filament winding molding, and hand lay-up molding are preferred.

### Examples

Specific examples of the present invention will be described below, but the present invention is not particularly limited to the examples.

### <Example 1: Bifunctional Epoxy Compound and Bifunctional Thiol Compound>

### (Surface Treatment Step)

An aluminum plate (A6063) having a thickness of 1.5 mm in a rectangular shape in plane view of 18 mm × 45 mm (aluminum article) was subjected to a chemical conversion treatment by dipping in a sodium hydroxide aqueous solution having a concentration of 5% by mass for 1.5 minutes, then neutralizing with a nitric acid aqueous solution having a concentration of 5% by mass, washing with water, and drying, and then the aluminum plate having been subjected to the chemical conversion treatment was subjected to a boehmite treatment (surface treatment) by boiling in pure water for 10 minutes and baking at 250°C for 10 minutes. A surface-treated part (i.e., a boehmite film having surface unevenness) was formed on the surface of the aluminum plate through the boehmite treatment.

### (Functional Group Adherent Layer Forming Step)

Subsequently, the aluminum plate having been subjected to the boehmite treatment was dipped in a silane coupling agent-containing solution at 70°C containing 2 g of 3-aminopropyltrimethoxysilane ("KBM-903", produced by Shin-Etsu Silicone Co., Ltd.) dissolved in 1,000 g of industrial ethanol, for 20 minutes, and then the aluminum plate was taken out and dried, so as to form a functional group adherent layer on the surface of the boehmite film (surface-treated part).

### (Resin Coating Layer Forming Step)

Subsequently, a polyaddition reactive composition obtained by dissolving 100 g of an epoxy resin ("jER (registered trademark) 1001", produced by Mitsubishi Chemical Corporation), 31.5 g of 1,4-bis(3-mercaptobutyryloxy)butane ("Karenz MT (registered trademark) BD1", produced by Showa Denko K.K.), and 5.3 g of 2,4,6-tris(dimethylaminomethyl)phenol ("DMP-30", produced by Fujifilm Wako Pure Chemical Corporation) in 244 g of acetone was coated by a spray coating method to a dry thickness of 10 µm on the functional group adherent surface of the aluminum plate having the functional group adherent layer formed thereon, then allowed to stand in air at ordinary temperature for 30 minutes to evaporate the solvent, then allowed to stand in a furnace at 150°C for 30 minutes to perform polyaddition reaction, and then returned to ordinary temperature, so as to form a resin coating layer having a linear polymer structure having a thickness of 10 pm on the surface of the functional group adherent layer. In this example, the resin coating layer was a primer layer, and an aluminum plate with a primer (i.e., a metal plate with a primer 1) was produced in this manner.

### (Production of Test Piece)

On the surface on the side of the primer layer of the aluminum plate with a primer, a polycarbonate resin (PC resin) ("Lexan (registered trademark) 121R-111", produced by SABIC) (bonding target) was injection molded with an injection molding machine ("SE100V", produced by Sumitomo Heavy Industries, Ltd., cylinder temperature: 300°C, tool temperature: 110°C, injection speed: 10 mm/sec, peak/holding pressure: 100/80 (MPa/MPa)), so as to produce a test piece for a tensile test according to ISO 19095 (Part 3) (aluminum: 18 mm × 45 mm × 1.5 mm, resin: 10 mm × 45 mm × 3 mm) (metal-resin bonded article 1).

### <Example 2: Bifunctional Isocyanate Compound and Bifunctional Glycol Compound>

### (Resin Coating Layer Forming Step)

On the aluminum plate obtained through (Surface Treatment Step) and (Functional Group Adherent Layer Forming Step) of Example 1, a resin composition containing a thermosetting resin obtained by mixing 100 g of a bisphenol A type epoxy resin ("jER 828 (tradename)", produced by Mitsubishi Chemical Corporation) as a thermosetting resin, 70 g of pentaerythritol tetrakis(3-mercaptobutyrate) ("Karenz MT PE1 (tradename)", produced by Showa Denko K.K., a curing agent for the epoxy resin), and 10 g of 2,4,6-tris(dimethylaminomethyl)phenol ("DMP-30", produced by Fujifilm Wako Pure Chemical Corporation), dissolved in 344 g of acetone was coated by a spray coating method to a dry thickness of 10 µm, and then allowed to stand in air at ordinary temperature for 30 minutes to perform evaporation of the solvent and curing, so as to form a resin coating layer having a crosslinked structure as the first layer.

Subsequently, on the surface of the resin coating layer, a polyaddition reactive composition obtained by dissolving 100 g of 4,4'-diphenylmethane diisocyanate, 76 g of propylene glycol, and 0.6 g of 2,4,6-tris(dimethylaminomethyl)phenol ("DMP-30", produced by Fujifilm Wako Pure Chemical Corporation) in 298 g of acetone was coated by a spray coating method to a dry thickness of 10 µm, then allowed to stand in air at ordinary temperature for 30 minutes to evaporate the solvent, then allowed to stand in a furnace at 150°C for 30 minutes to perform polyaddition reaction, and then returned to ordinary temperature, so as to form a resin coating layer having a linear polymer structure having a thickness of 10 pm as the outermost surface of the resin coating layer as the first layer. In this example, the resin coating layer was a primer layer, and an aluminum plate with a primer (i.e., a metal plate with a primer 2) was produced in this manner.

### (Production of Test Piece)

On the surface on the side of the primer layer of the aluminum plate with a primer, a polybutylene terephthalate resin (PBT resin) ("VALOX (registered trademark) 507", produced by SABIC, containing 30% by mass of glass fibers (GF)) (bonding target) was injection molded with an injection molding machine ("SE100V", produced by Sumitomo Heavy Industries, Ltd., cylinder temperature: 240°C, tool temperature: 80°C, injection speed: 10 mm/sec, peak/holding pressure: 100/80 (MPa/MPa)), so as to produce a test piece for a tensile test according to ISO 19095 (aluminum: 18 mm × 45 mm × 1.5 mm, resin: 10 mm × 45 mm × 3 mm) (metal-resin bonded article 2).

### <Example 3: Bifunctional Epoxy Compound and Bifunctional Carboxy Compound>

### (Surface Treatment Step)

The surface of an iron plate having a thickness of 1.5 mm in a rectangular shape in plane view of 18 mm × 45 mm was degreased with acetone and roughened with #100 sandpaper.

### (Functional Group Adherent Layer Forming Step)

Subsequently, the iron plate having a roughened surface was dipped in a silane coupling agent-containing solution at 70°C containing 2 g of 3-aminopropyltrimethoxysilane ("KBM-903", produced by Shin-Etsu Silicone Co., Ltd.) dissolved in 1,000 g of industrial ethanol, for 20 minutes, and then the iron plate was taken out and dried, so as to form a functional group adherent layer further on the surface of the iron plate having the surface roughened in the preceding step (Surface Treatment Step).

### (Resin Coating Layer Forming Step)

Subsequently, a polyaddition reactive composition obtained by dissolving 100 g of an epoxy resin ("jER (registered trademark) 1004", produced by Mitsubishi Chemical Corporation), 9.2 g of terephthalic acid, and 0.44 g of 2,4,6-tris(dimethylaminomethyl)phenol ("DMP-30", produced by Fujifilm Wako Pure Chemical Corporation) in 203 g of methyl ethyl ketone at 50°C was coated by a spray coating method to a dry thickness of 10 pm on the roughened surface of the iron plate, then allowed to stand in air at ordinary temperature for 30 minutes to evaporate the solvent, then allowed to stand in a furnace at 150°C for 90 minutes to perform polyaddition reaction, and then returned to ordinary temperature, so as to form a resin coating layer having a linear polymer structure having a thickness of 10 pm on the surface-treated surface of the iron plate. In this example, the resin coating layer was a primer layer, and an iron plate with a primer (i.e., a metal plate with a primer 3) was produced in this manner.

### (Production of Test Piece)

On the surface on the side of the primer layer of the iron plate with a primer, a polybutylene terephthalate resin (PBT resin) ("VALOX (registered trademark) 507", produced by SABIC, containing 30% by mass of glass fibers (GF)) (bonding target) was injection molded with an injection molding machine ("SE100V", produced by Sumitomo Heavy Industries, Ltd., cylinder temperature: 245°C, tool temperature: 80°C, injection speed: 10 mm/sec, peak/holding pressure: 100/80 (MPa/MPa)), so as to produce a test piece for a tensile test according to ISO 19095 (iron: 18 mm × 45 mm × 1.5 mm, resin: 10 mm × 45 mm × 3 mm) (metal-resin bonded article 3).

### <Example 4: Radically Polymerizable Compound System>

### (Surface Treatment Step)

The surface of a stainless steel (SUS304) plate having a thickness of 1.5 mm in a rectangular shape in plane view of 18 mm × 45 mm was degreased with acetone and roughened with #100 sandpaper.

### (Functional Group Adherent Layer Forming Step)

Subsequently, the SUS304 plate having a roughened surface was dipped in a silane coupling agent-containing solution at 70°C containing 2 g of 3-methacryloxypropyltrimethoxysilane ("KBM-503", produced by Shin-Etsu Silicone Co., Ltd.) dissolved in 1,000 g of industrial ethanol, for 20 minutes, and then the SUS304 plate was taken out and dried, so as to form a functional group adherent layer further on the surface of the SUS304 plate having the surface roughened in the preceding step (Surface Treatment Step).

### (Resin Coating Layer Forming Step)

Subsequently, a thermosetting resin composition obtained by mixing 100 g of a vinyl ester resin ("Ripoxy (registered trademark) R-802", produced by Showa Denko K.K.), 20 g of styrene monomer, 20 g of methyl methacrylate monomer, and 1.4 g of an organic peroxide catalyst ("Perbutyl (registered trademark) O", produced by Kayaku Akzo Corporation) was coated by a spray coating method to a dry thickness of 5 pm on the functional group adherent surface of the SUS304 plate having been subjected to the functional group adherent layer forming step, and then cured by heating to 100°C for 30 minutes, so as to form a resin coating layer having a crosslinked structure as the first layer.

Subsequently, a radically polymerizable composition obtained by mixing 70 g of 2-ethylhexyl acrylate, 30 g of lauryl methacrylate, and 1.0 g of Perbutyl O was coated by a spray coating method to a dry thickness of 10 pm on the outermost surface of the resin coating layer as the first layer, and after covering with a PET film, allowed to stand in a furnace at 120°C for 30 minutes to perform radical polymerization reaction, followed by returning to ordinary temperature, so as to form a resin coating layer having a linear polymer structure having a thickness of 10 pm as the resin coating layer as the second layer on the outermost surface of the resin coating layer as the first layer. In this example, the resin coating layer was a primer layer, and a stainless steel plate with a primer (i.e., a metal plate with a primer 4) was produced in this manner.

### (Production of Test Piece)

On the surface on the side of the primer layer of the stainless steel plate with a primer, a polybutylene terephthalate resin (PBT resin) ("VALOX (registered trademark) 507", produced by SABIC, containing 30% by mass of glass fibers (GF)) (bonding target) was injection molded with an injection molding machine ("SE100V", produced by Sumitomo Heavy Industries, Ltd., cylinder temperature: 245°C, tool temperature: 80°C, injection speed: 10 mm/sec, peak/holding pressure: 100/80 (MPa/MPa)), so as to produce a test piece for a tensile test according to ISO 19095 (stainless steel: 18 mm × 45 mm × 1.5 mm, resin: 10 mm × 45 mm × 3 mm) (metal-resin bonded article 4).

### <Example 5: Bifunctional Epoxy Compound, Bifunctional Thiol Compound, and Bifunctional Carboxy Compound>

### (Surface Treatment Step)

The surface of a magnesium plate having a thickness of 1.5 mm in a rectangular shape in plane view of 18 mm × 45 mm was degreased with acetone and roughened with #100 sandpaper.

### (Functional Group Adherent Layer Forming Step)

Subsequently, the magnesium plate having a roughened surface was dipped in a silane coupling agent-containing solution at 70°C containing 2 g of 3-aminopropyltrimethoxysilane ("KBM-903", produced by Shin-Etsu Silicone Co., Ltd.) dissolved in 1,000 g of industrial ethanol, for 20 minutes, and then the magnesium plate was taken out and dried, so as to form a functional group adherent layer on the roughened surface of the magnesium plate.

### (Resin Coating Layer Forming Step)

Subsequently, a polyaddition reactive composition obtained by dissolving 200 g of an epoxy resin ("jER (registered trademark) 1004", produced by Mitsubishi Chemical Corporation), 9.2 g of terephthalic acid, 16.5 g of 1,4-bis(3-mercaptobutyryloxy)butane ("Karenz MT (registered trademark) BD1", produced by Showa Denko K.K.), and 1.5 g of 2,4,6-tris(dimethylaminomethyl)phenol ("DMP-30", produced by Fujifilm Wako Pure Chemical Corporation) in 406 g of acetone was coated by a spray coating method to a dry thickness of 10 pm on the functional group adherent surface of the magnesium plate having the functional group adherent layer formed thereon, then allowed to stand in air at ordinary temperature for 30 minutes to evaporate the solvent, then allowed to stand in a furnace at 150°C for 60 minutes to perform polyaddition reaction, and then returned to ordinary temperature, so as to form a resin coating layer having a linear polymer structure having a thickness of 10 pm on the surface of the functional group adherent layer. In this example, the resin coating layer was a primer layer, and a magnesium plate with a primer (i.e., a metal plate with a primer 5) was produced in this manner.

### (Production of Test Piece)

On the surface on the side of the primer layer of the magnesium plate with a primer, a polyetherimide resin (PEI resin) ("Ultem (registered trademark)", produced by SABIC) (bonding target) was injection molded with an injection molding machine ("SE100V", produced by Sumitomo Heavy Industries, Ltd., cylinder temperature: 350°C, tool temperature: 150°C, injection speed: 50 mm/sec, peak/holding pressure: 160/140 (MPa/MPa)), so as to produce a test piece for a tensile test according to ISO 19095 (magnesium: 18 mm × 45 mm × 1.5 mm, resin: 10 mm × 45 mm × 3 mm) (metal-resin bonded article 5).

### <Example 6: Bifunctional Isocyanate Compound, Bifunctional Amino Compound, and Bifunctional Thiol Compound>

### (Resin Coating Layer Forming Step)

On the aluminum plate obtained through (Surface Treatment Step) and (Functional Group Adherent Layer Forming Step) of Example 1, a polyaddition reactive composition obtained by dissolving 100 g of 4,4'-diphenylmethane diisocyanate, 23 g of hexamethylenediamine, 15 g of 1,4-bis(3-mercaptobutyryloxy)butane ("Karenz MT (registered trademark) BD1", produced by Showa Denko K.K.), and 0.6 g of 2,4,6-tris(dimethylaminomethyl)phenol ("DMP-30", produced by Fujifilm Wako Pure Chemical Corporation) in 338 g of acetone was coated by a spray coating method to a dry thickness of 30 µm, then allowed to stand in air at ordinary temperature for 30 minutes to perform evaporation of the solvent and reaction of the polyurea, then allowed to stand in a furnace at 120°C for 20 minutes to perform the remaining polyaddition reaction, and then returned to ordinary temperature, so as to form a resin coating layer having a linear polymer structure having a thickness of 30 pm as the outermost surface. In this example, the resin coating layer was a primer layer, and an aluminum plate with a primer (i.e., a metal plate with a primer 6) was produced in this manner.

### (Production of Test Piece)

On the surface on the side of the primer layer of the aluminum plate with a primer, a polybutylene terephthalate resin (PBT resin) ("VALOX (registered trademark) 507", produced by SABIC, containing 30% by mass of glass fibers (GF)) (bonding target) was injection molded with an injection molding machine ("SE100V", produced by Sumitomo Heavy Industries, Ltd., cylinder temperature: 240°C, tool temperature: 80°C, injection speed: 10 mm/sec, peak/holding pressure: 100/80 (MPa/MPa)), so as to produce a test piece for a tensile test according to ISO 19095 (aluminum: 18 mm × 45 mm × 1.5 mm, resin: 10 mm × 45 mm × 3 mm) (metal-resin bonded article 6).

### <Comparative Example 1>

On an aluminum plate obtained through the same surface treatment step and functional group adherent layer forming step as in Example 1 (i.e., a metal plate with no primer), the polycarbonate resin was tried to injection mold in the same manner as in Example 1 without the formation of the resin coating layer, but was completely not adhered to the aluminum plate.

### <Comparative Example 2>

On an aluminum plate having been subjected to the same procedure as in Example 2 except that the resin coating layer as the second layer was not formed (i.e., a metal plate with a primer 2'), the polycarbonate resin was tried to injection mold, but was completely not adhered to the aluminum plate.

### <Comparative Example 3>

### (Surface Treatment Step)

The surface of an aluminum plate (A6063) (aluminum article) having a thickness of 1.5 mm in a rectangular shape in plane view of 18 mm × 45 mm was degreased with acetone and roughened with #100 sandpaper.

### (Resin Coating Layer Forming Step)

Subsequently, a polyaddition reactive composition obtained by dissolving 100 g of an epoxy resin ("jER (registered trademark) 1001", produced by Mitsubishi Chemical Corporation), 31.5 g of 1,4-bis(3-mercaptobutyryloxy)butane ("Karenz MT (registered trademark) BD1", produced by Showa Denko K.K.), and 5.3 g of 2,4,6-tris(dimethylaminomethyl)phenol ("DMP-30", produced by Fujifilm Wako Pure Chemical Corporation) in 244 g of acetone was coated by a spray coating method to a dry thickness of 10 pm on the surface of the aluminum plate roughened with #100 sandpaper, then allowed to stand in air at ordinary temperature for 30 minutes to evaporate the solvent, then allowed to stand in a furnace at 150°C for 30 minutes to perform polyaddition reaction, and then returned to ordinary temperature, so as to form a resin coating layer having a linear polymer structure having a thickness of 10 pm on the surface of the aluminum plate roughened with #100 sandpaper. In this example, the resin coating layer was a primer layer, and an aluminum plate with a primer (i.e., a metal plate with a primer 3') was produced in this manner.

### (Production of Test Piece)

On the surface on the side of the primer layer of the aluminum plate with a primer, a polycarbonate resin (PC resin) ("Lexan (registered trademark) 121R-111", produced by SABIC) (bonding target) was injection molded with an injection molding machine ("SE100V", produced by Sumitomo Heavy Industries, Ltd., cylinder temperature: 300°C, tool temperature: 110°C, injection speed: 10 mm/sec, peak/holding pressure: 100/80 (MPa/MPa)), so as to produce a test piece for a tensile test according to ISO 19095 (Part 3) (aluminum: 18 mm × 45 mm × 1.5 mm, resin: 10 mm × 45 mm × 3 mm) (metal-resin bonded article 3').

### <Comparative Example 4>

### (Surface Treatment Step)

The surface of an aluminum plate (A6063) (aluminum article) having a thickness of 1.5 mm in a rectangular shape in plane view of 18 mm × 45 mm was degreased with acetone and roughened with #100 sandpaper.

### (Resin Coating Layer Forming Step)

A resin composition containing a thermosetting resin obtained by mixing 100 g of a bisphenol A type epoxy resin ("jER 828 (tradename)", produced by Mitsubishi Chemical Corporation) as a thermosetting resin, 70 g of pentaerythritol tetrakis(3-mercaptobutyrate) ("Karenz MT PE1 (tradename)", produced by Showa Denko K.K., a curing agent for the epoxy resin), and 10 g of 2,4,6-tris(dimethylaminomethyl)phenol ("DMP-30", produced by Fujifilm Wako Pure Chemical Corporation), dissolved in 344 g of acetone was coated by a spray coating method to a dry thickness of 10 µm, and then allowed to stand in air at ordinary temperature for 30 minutes to perform evaporation of the solvent and curing, so as to form a resin coating layer having a crosslinked structure as the first layer on the surface of the aluminum plate roughened with #100 sandpaper.

Subsequently, on the surface of the resin coating layer, a polyaddition reactive composition obtained by dissolving 100 g of 4,4'-diphenylmethane diisocyanate, 76 g of propylene glycol, and 0.6 g of 2,4,6-tris(dimethylaminomethyl)phenol ("DMP-30", produced by Fujifilm Wako Pure Chemical Corporation) in 298 g of acetone was coated by a spray coating method to a dry thickness of 10 µm, then allowed to stand in air at ordinary temperature for 30 minutes to evaporate the solvent, then allowed to stand in a furnace at 150°C for 30 minutes to perform polyaddition reaction, and then returned to ordinary temperature, so as to form a resin coating layer having a linear polymer structure having a thickness of 10 pm as the outermost surface of the resin coating layer as the first layer. In this example, the resin coating layer was a primer layer, and an aluminum plate with a primer (i.e., a metal plate with a primer 4') was produced in this manner.

### (Production of Test Piece)

On the surface on the side of the primer layer of the aluminum plate with a primer, a polycarbonate resin (PC resin) ("Lexan (registered trademark) 121R-111", produced by SABIC) (bonding target) was injection molded with an injection molding machine ("SE100V", produced by Sumitomo Heavy Industries, Ltd., cylinder temperature: 300°C, tool temperature: 110°C, injection speed: 10 mm/sec, peak/holding pressure: 100/80 (MPa/MPa)), so as to produce a test piece for a tensile test according to ISO 19095 (Part 3) (aluminum: 18 mm × 45 mm × 1.5 mm, resin: 10 mm × 45 mm × 3 mm) (metal-resin bonded article 4').

### <Comparative Example 5>

### (Resin Coating Layer Forming Step)

On an aluminum plate obtained through the same surface treatment step and functional group adherent layer forming step as in Example 1, a polyaddition reactive composition obtained by reacting 100 g of an epoxy resin ("jER (registered trademark) 1001", produced by Mitsubishi Chemical Corporation), 31.5 g of 1,4-bis(3-mercaptobutyryloxy)butane ("Karenz MT (registered trademark) BD1", produced by Showa Denko K.K.), and 5.3 g of 2,4,6-tris(dimethylaminomethyl)phenol ("DMP-30", produced by Fujifilm Wako Pure Chemical Corporation) in 244 g of toluene at 110°C for 1 hour was coated by a spray coating method to a dry thickness of 10 pm on the functional group adherent surface of the aluminum plate having the functional group adherent layer formed thereon, then allowed to stand in air at ordinary temperature for 30 minutes to evaporate the solvent, then allowed to stand in a furnace at 150°C for 30 minutes to perform polyaddition reaction, and then returned to ordinary temperature, so as to form a resin coating layer having a linear polymer structure having a thickness of 10 pm on the surface of the functional group adherent layer. In this example, the resin coating layer was a primer layer, and an aluminum plate with a primer (i.e., a metal plate with a primer 5') was produced in this manner.

### (Production of Test Piece)

On the surface on the side of the primer layer of the aluminum plate with a primer, a modified polyphenylene ether resin (m-PPE resin) ("Noryl (registered trademark) 731", produced by SABIC) (bonding target) was injection molded with an injection molding machine ("SE 100V", produced by Sumitomo Heavy Industries, Ltd., cylinder temperature: 290°C, tool temperature: 120°C, injection speed: 10 mm/sec, peak/holding pressure: 140/120 (MPa/MPa)), so as to produce a test piece for a tensile test according to ISO 19095 (Part 3) (aluminum: 18 mm × 45 mm × 1.5 mm, resin: 10 mm × 45 mm × 3 mm) (metal-resin bonded article 5').

### <Comparative Example 6>

On an aluminum plate obtained through the same surface treatment step and functional group adherent layer forming step as in Example 1, a polymerized maleic anhydride-modified olefin based adhesive paint (Hardlen TD-15B (registered trademark)" produced by Toyobo Co., Ltd.) was coated to a dry thickness of 10 µm, and subjected to a baking treatment at 130°C for 60 seconds, so as to produce an aluminum plate with an adhesive layer.

On the aluminum plate with an adhesive layer, the polycarbonate was injected to try insert molding in the same manner as in Example 1, but was not bondable.

### <Comparative Example 7>

### (Surface Treatment Step)

The same treatment as in Example 1 was performed.

### (Functional Group Adherent Layer Forming Step)

Subsequently, the aluminum plate was dipped in a solution containing 2 g of 4,4'-diphenylmethane diisocyanate (isocyanate compound) dissolved in 100 g of toluene (solvent) at 70°C for 5 minutes, and then taken out and dried. An isocyanato group was applied to the surface of the aluminum plate in this manner.

### (Production of Test Piece)

The polycarbonate resin was injected to try insert molding in the same procedure as in Example 1 except that a resin coating layer was not formed on the aluminum plate, but was not bondable.

### <Comparative Example 8>

### (Surface Treatment Step)

The same treatment as in Example 1 was performed.

### (Functional Group Adherent Layer Forming Step)

Subsequently, the aluminum plate was dipped in a solution containing 2 g of pentaerythritol tetrakis(3-mercaptobutyrate) ("Karenz MT (registered trademark) PE1", produced by Showa Denko K.K.) dissolved in 100 g of toluene (solvent) at 70°C for 5 minutes, and then taken out and dried. A mercapto group was applied to the surface of the aluminum plate in this manner.

### (Production of Test Piece)

The polycarbonate resin was injected to try insert molding in the same procedure as in Example 1 except that a resin coating layer was not formed on the aluminum plate, but was not bondable.

### <Comparative Example 9>

### (Surface Treatment Step)

The same treatment as in Example 1 was performed.

### (Functional Group Adherent Layer Forming Step)

Subsequently, the aluminum plate was dipped in a solution containing 2 g of 4,4'-diphenylmethane diisocyanate (isocyanate compound) dissolved in 100 g of toluene (solvent) at 70°C for 5 minutes, and then taken out and dried. An isocyanato group was applied to the surface of the aluminum plate in this manner.

Furthermore, the aluminum plate was dipped in a solution containing 2 g of pentaerythritol tetrakis(3-mercaptobutyrate) ("Karenz MT (registered trademark) PE1", produced by Showa Denko K.K.) dissolved in 100 g of toluene (solvent) at 70°C for 5 minutes, and then taken out and dried. A mercapto group was extended on the isocyanato group in this manner.

### (Production of Test Piece)

The polycarbonate resin was injected to try insert molding in the same procedure as in Example 1 except that a resin coating layer was not formed on the aluminum plate, but was not bondable.

<Comparative Example 10>

### (Surface Treatment Step)

The same treatment as in Example 1 was performed.

### (Functional Group Adherent Layer Forming Step)

Subsequently, the aluminum plate was dipped in a solution containing 0.7 g of triethoxysilylpropylaminotriazine thiol monosodium dissolved in 1 L of a 95% by volume ethanol solution at 25°C for 30 minutes, and then taken out and dried at 160°C for 10 minutes. Thereafter, the aluminum plate was dipped in a bonding auxiliary agent containing 1 g of N,N'-m-phenylenedimaleimide and 2 g of dicumyl peroxide dissolved in 1 L of acetone at 25°C for 10 minutes, then taken out and dried at 150°C for 10 minutes. Thereafter, a solution containing 2 g of dicumyl peroxide dissolved in 1 L of ethanol was sprayed on the aluminum plate at 25°C and dried in air. A dehydrated silanol-containing triazine thiol derivative film was formed on the surface of the aluminum plate in this manner.

### (Production of Test Piece)

The polycarbonate resin was injected to try insert molding in the same procedure as in Example 1 except that a resin coating layer was not formed on the aluminum plate, but was not bondable.

### <Comparative Example 11: Bifunctional Epoxy Compound and Bifunctional Thiol Compound>

### (Surface Treatment Step)

The same treatment as in Example 1 was performed.

### (Functional Group Adherent Layer Forming Step)

The same treatment as in Example 1 was performed.

### (Resin Coating Layer Forming Step)

A polyaddition reactive composition obtained by dissolving 100 g of an epoxy resin ("jER (registered trademark) 1001", produced by Mitsubishi Chemical Corporation), 31.5 g of 1,4-bis(3-mercaptobutyryloxy)butane ("Karenz MT (registered trademark) BD1", produced by Showa Denko K.K.), and 5.3 g of 2,4,6-tris(dimethylaminomethyl)phenol ("DMP-30", produced by Fujifilm Wako Pure Chemical Corporation) in 244 g of acetone was coated to a dry thickness of 30 pm on a release film, then allowed to stand in a furnace at 150°C for 30 minutes to perform polyaddition reaction, and then returned to ordinary temperature, so as to form a thermoplastic resin layer having a linear polymer structure on the release film.

The thermoplastic resin layer on the release film was placed on the surface of the functional group adherent layer of the aluminum plate, melted at 170°C and spread to a thickness of 80 µm, and then returned to room temperature, so as to form a resin coating layer having a linear polymer structure having a thickness of 30 µm. In this example, the resin coating layer was a primer layer, and an aluminum plate with a primer (i.e., a metal plate with a primer 11') was produced in this manner.

### (Production of Test Piece)

On the surface on the side of the primer layer of the aluminum plate with a primer, a polycarbonate resin (PC resin) ("Lexan (registered trademark) 121R-111", produced by SABIC) (bonding target) was injection molded with an injection molding machine ("SE100V", produced by Sumitomo Heavy Industries, Ltd., cylinder temperature: 300°C, tool temperature: 110°C, injection speed: 10 mm/sec, peak/holding pressure: 100/80 (MPa/MPa)), so as to produce a test piece for a tensile test according to ISO 19095 (Part 3) (aluminum: 18 mm × 45 mm × 1.5 mm, resin: 10 mm × 45 mm × 3 mm) (metal-resin bonded article 11').

### [Evaluation of Bondability]

The test pieces produced in Examples 1 to 6 (metal-resin bonded articles 1 to 6) and the test pieces produced in Comparative Examples 3 to 5 and 11 (metal-resin bonded articles 3' to 5' and 11') after retaining at ordinary temperature and ordinary humidity (temperature of 23°C, 50%RH) for 24 to 48 hours, after allowing to stand in a high temperature and high humidity (85°C, 85%RH) atmosphere for 200 hours, after allowing to stand in the high temperature and high humidity atmosphere for 600 hours, and after allowing to stand in the high temperature and high humidity atmosphere for 1,000 hours, from the production of the test pieces, each were measured for the bonding strength between the metal plate with a primer and the resin according to ISO 19095 1-4 with a tensile tester (Universal Testing Machine Autograph "AG-IS", produced by Shimadzu Corporation, load cell: 10 kN, tensile rate: 10 mm/min, temperature: 23°C, 50%RH). The measurement results are shown in Tables 1 to 3 below.

### [Evaluation of Adhesiveness]

The metal plates with a primer 1 to 7 produced in Examples 1 to 7 and the metal plates with a primer 3' to 5' and 11' produced in Comparative Examples 3 to 5 and 11 after retaining at ordinary temperature and ordinary humidity (temperature of 23°C, 50%RH) for 24 to 48 hours and after immersing in warm water at 60°C for 24 hours after the production of the metal plates with a primer, each were subjected to a crosscut test according to the crosscut test method of JIS K5600_5_6.

Specifically, according to JIS K5600_5_6 (adhesiveness, crosscut test), the primer layer on the metal plate with a primer was cut into six grids through the primer layer to reach the metal plate, an adhesive tape was adhered on the grids and then peeled off, then the state of adhesion of the primer layer was visually observed, and the adhesion force between the metal plate and the resin coating layer constituting the metal plate with a primer was evaluated according to "Table 1 Classification of Test Results" of JIS K5600_5_6.

The evaluation points of "Table 1 Classification of Test Results" of JIS K5600_5_6 are as follows.
0: The cut edges are smooth, and all the grids are not peeled.
1: The coating film was slightly peeled at the intersection of the cut edges. The affected portion in the crosscut part clearly does not exceed 5%.
2: The coating film was peeled along the cut edges and/or at the intersection thereof. The affected portion in the crosscut part clearly exceeds 5% but does not exceed 15%.
3: The coating film was peeled partially or thoroughly largely along the cut edges, and/or the various portions of the grids are peeled partially or thoroughly. The affected portion in the crosscut part clearly exceeds 15% but does not exceed 35%.
4: The coating film was peeled partially or thoroughly largely along the cut edges, and/or the several grids are peeled partially or thoroughly. The affected portion in the crosscut part clearly does not exceed 65%.
5: The extent of peeling is not classified into the class 4.

**Table 1**

| | | Example 1 (epoxy /thiol) | Example 2 (isocyanate/glycol) | Example 3 (epoxy/carboxy) | Example 4 (radically polymerizable compound) | Example 5 (epoxy/carboxy, thiol) |
|---|---|---|---|---|---|---|
| Metal base material | | aluminum | aluminum | iron | SUS304 | magnesium |
| Surface treatment | | boehmite | boehmite | sanding | sanding | sanding |
| Functional group adherent layer | | KBM-903 | KBM-903 | KBM-903 | KBM-503 | KBM-903 |
| Resin coating layer (first layer) | | polyaddition reaction on functional group adherent layer (1001/BD1) | (828/PE-1) | polyaddition reaction on functional group adherent layer (1004/terephthalic acid) | (R-802 + SM + MMA) | polyaddition reaction on functional group adherent layer (1004/BD1, terephthalic acid) |
| Resin coating layer (second layer) | | - | polyaddition reaction on functional group adherent layer (diisocyanate/PG) | - | Radical polymerization reaction on functional group adherent layer (2EHA/LMA) | - |
| Resin species of injection molding | | PC | PBT (GF: 30%) | PBT (GF: 30%) | PBT (GF: 30%) | PEI |
| Evaluation of adhesiveness Crosscut test | Room temperature, after 24 to 48 hr from production of metal plate with primer | 0 | 0 | 0 | 0 | 0 |
| | After immersing warm water at 60°C for 24 hr | 0 | 0 | 0 | 0 | 0 |
| Evaluation of bondability Tensile shear strength (MPa) | Room temperature, after 24 to 48 hr from production of test piece | 25 | 26 | 25 | 14 | 22 |
| | After allowing to stand at 85°C 85% for 200 hr | 20 | 20 | 20 | 11 | 20 |
| | After allowing to stand at 85°C 85% for 600 hr | 19 | 19 | 19 | 10 | 19 |
| | After allowing to stand at 85°C 85% for 1,000 hr | 18 | 18 | 18 | 10 | 18 |

**Table 2**

| | | Example 6 (isocyanate/amino compound, thiol) | Comparative Example 1 | Comparative Example 2 | Comparative Example 3 (epoxy /thiol) | Comparative Example 4 (isocyanate/glycol) | Comparative Example 5 (epoxy /thiol) |
|---|---|---|---|---|---|---|---|
| Metal base material | | aluminum | aluminum | aluminum | aluminum | aluminum | aluminum |
| Surface treatment | | boehmite | boehmite | boehmite | sanding | sanding | boehmite |
| Functional group adherent layer | | KBM-903 | KBM-903 | KBM-903 | - | - | KBM-903 |
| Resin coating layer (first layer) | | polyaddition reaction on functional group adherent layer (isocyanate/HMD, BD1) | - | (828/PE-1) | polyaddition reaction on functional group adherent layer (1001/BD 1) | (828/PE-1) | polyaddition solution coated on functional group adherent layer (1001/BD 1) |
| Resin coating layer (second layer) | | - | - | - | - | polyaddition reaction on functional group adherent layer (isocyanate/PG) | - |
| Resin species of injection molding | | PBT (GF: 30%) | PC | PBT (GF: 30%) | PC | PC | m-PPE |
| Evaluation of adhesiveness Crosscut test | Room temperature, after 24 to 48 hr from production of metal plate with primer | 0 | - | - | 0 | 0 | 0 |
| | After immersing warm water at 60°C for 24 hr | 0 | - | - | 1 | 1 | 0 |
| Evaluation of bondability Tensile shear strength (MPa) | Room temperature, after 24 to 48 hr from production of test piece | 24 | not bondable | not bondable | 8 | 12 | 5 |
| | After allowing to stand at 85°C 85% for 200 hr | 21 | - | - | 2 | 6 | 4 |
| | After allowing to stand at 85°C 85% for 600 hr | 20 | - | - | 1 | 5 | 3 |
| | After allowing to stand at 85°C 85% for 1,000 hr | 19 | - | - | 1 | 4 | 3 |

**Table 3**

| | | Comparative Example 6 | Comparative Example 7 | Comparative Example 8 | Comparative Example 9 | Comparative Example 10 | Comparative Example 11 (epoxy /thiol) |
|---|---|---|---|---|---|---|---|
| Metal base material | | aluminum | aluminum | aluminum | aluminum | aluminum | aluminum |
| Surface treatment | | boehmite | boehmite | boehmite | boehmite | boehmite | boehmite |
| Functional group adherent layer | | KBM-903 | isocyanate | thiol | isocyanate, thiol | alkoxysilane-containing triazine thiol derivative | KBM-903 |
| Resin coating layer (first layer) | | TD-15B (polymerized) | - | - | - | - | polyaddition reacted resin laminated on functional group adherent layer (1001/BD1) |
| Resin coating layer (second layer) | | - | - | - | - | - | - |
| Resin species of injection molding | | PC | PC | PC | PC | PC | PC |
| Evaluation of adhesiveness Crosscut test | Room temperature, after 24 to 48 hr from production of metal plate with primer | - | - | - | - | - | 0 |
| | After immersing warm water at 60°C for 24 hr | - | - | - | - | - | 0 |
| Evaluation of bondability Tensile shear strength (MPa) | Room temperature, after 24 to 48 hr from production of test piece | not bondable | not bondable | not bondable | not bondable | not bondable | 13 |
| | After allowing to stand at 85°C 85% for 200 hr | - | - | - | - | - | 11 |
| | After allowing to stand at 85°C 85% for 600 hr | | | | - | - | 10 |
| | After allowing to stand at 85°C 85% for 1,000 hr | - | - | - | - | - | 9 |

As apparent from Tables 1 to 3, it has been found that the metal-resin bonded article of the present invention can adhere various metal base materials to bonding targets of various resin materials with a high adhesion strength, and the adhesiveness can be retained even after retaining in a high temperature and high humidity (e.g., a temperature of 85°C and a relative humidity of 85% in the examples above) condition for a long period of time (e.g., up to 1,000 hours in the examples above).

### Industrial Applicability

The metal-resin bonded article of the present invention can be used, for example, as automobile components, such as a door side panel, an engine hood, a roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and further as a chassis of a smartphone, a chassis of a notebook personal computer, a chassis of a tablet personal computer, a chassis of smartwatch, a chassis of a large size liquid crystal display television set (LCD-TV), a chassis of an outdoor LED illumination, and the like.

### Reference Sign List

- 1:: composite laminate
- 2:: metal base material
- 2a:: surface-treated part
- 3:: functional group adherent layer
- 4:: resin coating layer
- 14:: surface of resin coating layer (primer layer)
- 30A, 30B:: bonding target (resin material)
- 31:: adhesive

## Claims

1. A metal-resin bonded article comprising a composite laminate including a metal base material having laminated on a surface of the metal base material one layer or plural layers of a resin coating layer, and a resin material bonded and integrated thereto,
the resin coating layer being laminated on a surface-treated surface of the metal base material,
at least one layer of the resin coating layer containing a resin composition containing a linear chain polymer having a linear polymer structure polymerized on the metal base material,
a bonding strength between the composite laminate and the resin material satisfying the following condition 1, and
an adhesion force between the metal base material and the resin coating layer satisfying the following condition 2:
(condition 1) a value evaluated by a tensile shear test according to the evaluation methods for the adhesion interface performance in plastic-metal assemblies of ISO 19095, after retaining the composite laminate and the resin material having been bonded and integrated to each other, under ordinary temperature and ordinary humidity for 24 to 48 hours, being 10 MPa or more,
(condition 2) values evaluated according to the crosscut test of JIS K5600_5_6, after retaining the composite laminate having been produced, under ordinary temperature and ordinary humidity for 24 to 48 hours, and after immersing the composite laminate having been produced, in warm water at 60°C for 24 hours, being both 0.

2. The metal-resin bonded article according to claim 1, wherein the resin composition containing the linear chain polymer having a linear polymer structure contains a resin composition containing, as a constitutional component, at least one of the following items (1) and (2), which each are a combination of polyaddition reactive compounds forming the linear chain polymer, or a resin composition containing a linear chain polymer, which is a radical homopolymer or a radical copolymer of a monofunctional monomer having an unsaturated group:
(1) at least one compound selected from the group consisting of a bifunctional glycol compound, a bifunctional amino compound, and a bifunctional thiol compound, and a bifunctional isocyanate compound,
(2) at least one selected from the group consisting of a bifunctional carboxy compound and a bifunctional thiol compound, and a bifunctional epoxy compound.

3. The metal-resin bonded article according to claim 1 or 2, wherein the resin coating layer includes plural layers, at least one layer of which contains a cured material of a thermosetting resin, and
the thermosetting resin is at least one kind selected from the group consisting of a urethane resin, an epoxy resin, a vinyl ester resin, and an unsaturated polyester resin.

4. The metal-resin bonded article according to any one of claims 1 to 3, wherein the composite laminate includes a functional group adherent layer between the surface of the metal base material and the resin coating layer, the functional group adherent layer is laminated in contact with the metal base material and the resin coating layer, and
the functional group adherent layer has a functional group introduced from at least one kind selected from the group consisting of a silane coupling agent, an isocyanate compound, and a thiol compound.

5. The metal-resin bonded article according to any one of claims 1 to 4, wherein the surface treatment is at least one kind selected from the group consisting of a blast treatment, a grinding treatment, an etching treatment, a chemical conversion treatment, a plasma treatment, a corona discharge treatment, and an UV ozone treatment.

6. The metal-resin bonded article according to any one of claims 1 to 5, wherein the metal base material contains aluminum.

7. The metal-resin bonded article according to claim 6, wherein the surface treatment includes at least one kind of an etching treatment and a boehmite treatment.

8. The metal-resin bonded article according to any one of claims 1 to 5, wherein the metal base material contains a metal selected from the group consisting of iron, titanium, magnesium, a stainless steel, and copper.

9. The metal-resin bonded article according to any one of claims 1 to 8, wherein the resin coating layer is a primer layer, and
the surface of the composite laminate on the side of the primer layer and the resin material are bonded and integrated to each other.

10. A method for producing the metal-resin bonded article according to any one of claims 2 to 9,
the method comprising forming at least one layer of the resin coating layer by subjecting a combination of polyaddition reactive compounds forming the linear chain polymer to polyaddition reaction, or subjecting a radically polymerizable compound, which is the monofunctional monomer having an unsaturated group, to homopolymerization or copolymerization, on the surface-treated surface of the metal base material,
the combination of polyaddition reactive compounds being at least one of the following items (1) and (2):
(1) at least one compound selected from the group consisting of a bifunctional glycol compound, a bifunctional amino compound, and a bifunctional thiol compound, and a bifunctional isocyanate compound,
(2) at least one selected from the group consisting of a bifunctional carboxy compound and a bifunctional thiol compound, and a bifunctional epoxy compound.

11. The method for producing the metal-resin bonded article according to claim 10, wherein the method comprises, before forming the resin coating layer, subjecting the metal base material to at least one kind of a surface treatment selected from the group consisting of a blast treatment, a grinding treatment, an etching treatment, a chemical conversion treatment, a plasma treatment, a corona discharge treatment, and an UV ozone treatment.

12. The method for producing the metal-resin bonded article according to claim 10 or 11, wherein the method comprises, before forming the resin coating layer, treating the surface-treated surface of the metal base material with at least one kind selected from the group consisting of a silane coupling agent, an isocyanate compound, and a thiol compound, so as to form a functional group adherent layer.

13. The method for producing the metal-resin bonded article according to any one of claims 10 to 12, wherein the resin material is molded by at least one kind of a method selected from the group consisting of injection molding, press molding, filament winding molding, and hand lay-up molding, so as to bond and integrate the resin material to the surface on the side of the primer layer of the composite laminate.

14. The method for producing the metal-resin bonded article according to any one of claims 10 to 12, wherein the resin material is welded on the primer layer through at least one kind of a welding method selected from the group consisting of an ultrasonic welding method, a vibration welding method, an electromagnetic induction method, a high frequency method, a laser method, a thermal press method, and an injection welding method.
